# EUROPÄISCHE PATENTSCHRIFT

(11) **EP 0 635 623 B1**
(45) Veröffentlichungstag und Bekanntmachung des Hinweises auf die Patenterteilung: **12.06.1996**
(21) Anmeldenummer: 94111275.7
(22) Anmeldetag: 20.07.1994
(51) Int. Cl.: F01D 5/26, F01D 5/30, F04D 29/32

(54) **Laufrad einer Turbomaschine**
Rotor of a turbomachine
Rotor d'une turbomachine

(30) Priorität: 24.07.1993 DE 4324960
(43) Veröffentlichungstag der Anmeldung: 25.01.1995
(73) Patentinhaber: MTU MOTOREN- UND TURBINEN-UNION MÜNCHEN GMBH, D-80976 München (DE)
(72) Erfinder: Rossmann, Axel, D-85757 Karlsfeld (DE)

(56) Entgegenhaltungen:
- GB-A- 112 934
- GB-A- 252 701
- US-A- 2 948 506
- US-A- 3 702 222
- US-A- 3 867 069
- US-A- 4 093 399
- JOURNAL DE PHYSIQUE, Bd.2, Nr.4, 1. April 1992, PARIS (FR) Seiten 527 - 543, XP00301038 HSIAO-WEI D. CHIANG ET AL. 'Analysis of forced response of detuned blade rows'

## Beschreibung

Die Erfindung bezieht sich auf ein Laufrad nach dem Oberbegriff des Patentanspruchs 1.

Der Einsatz warmfester, leichter und spröder Legierungen (z.B. intermetallische Phasen), aber auch von Keramikwerkstoffen für Rotorschaufeln scheitert nicht zuletzt an der niedrigen Schlagzähigkeit und an dem damit verbundenen besonderen Risiko eines katastrophalen Schaufelschadens als Folge eines Fremdkörpereintritts oder eines Schaufelbruches. Bisher für Rotorschaufeln bzw. Laufschaufeln verwendete warmfeste und hoch-legierte Werkstoffe, z.B. Ni- oder Co- Basislegierungen, haben zwar eine ausreichende Schlagzägigkeit, belasten jedoch die Scheiben hochtouriger Turbinen, z.B. Niederdruckturbinen, durch ihr relativ hohes spezifisches Gewicht derart, daß nur verhältnismäßig geringe Lebensdauern der Scheiben durch die am äußeren Umfang der Radkränze auftretenden hohen Randlasten zu erwarten sind.

Ein weiteres Problem stellt die Beherrschung relativ großer Anregungsenergien für Schaufelschwingungen dar, insbesondere mit Rücksicht auf die zur Beherrschung der Fliehkraftbeanspruchungen notwendige Bauteilfestigkeit der Rotorschaufeln, so daß ein erhöhtes Risiko eines Schaufelbruches durch Schwingermüdung besteht.

Aus der US-PS 2,772,854 ist ein Laufrad nach der eingangs genannten Art bekannt, bei dem die Schaufelblätter der Laufschaufeln bei entsprechender Zentrifugalkraftbelastung schwingungsdämpfend aneinander abgestützt werden sollen. Hierzu weist der bekannte Fall jeweils zwischen einem Schaufelpaar unterschiedlich lang in Umfangsrichtung auskragende zungenartige Körper auf, die zwischen in axialer und in Umfangsrichtung sich überlappenden Enden einen Abstandspalt ausbilden, der in einem vorgegebenen Betriebspunkt zu Null wird, so daß gegenseitige Energien aus Schaufelschwingungen durch Bauteilreibung zwischen den Enden aufgezehrt werden sollen.

Der Erfindung liegt die Aufgabe zugrunde, ein Laufrad nach der eingangs genannten Art (Oberbegriff des Patentanspruchs 1) anzugeben, mit dem unter Beherrschung der aus vergleichsweise hohen Drehzahlen und Fliehkraftbeanspruchungen resultierenden Belastungen, die an den Schaufeln und im äußeren Umfangsbereich der Scheibe (Radkranz) auftreten, eine gewichtlich relativ leichte Rotor- bzw. Scheibenkonstruktion ermöglich wird.

Die gestellte Aufgabe ist gemäß Kennzeichnungsteil des Patentanspruchs 1 erfindungsgemäß gelöst.

Am Radkranz der Radscheibe bzw. des Laufrades sind dabei jeweils pro leichter und schwerer Laufschaufeln die Fuß- und entsprechenden Geometrien der Axialnuten auf die örtlich jeweils herrschenden Kraft- und Flächenbelastungen abgestimmt gestaltet. Es sollen dabei also die jeweils eigenständig pro leichter und schwerer Laufschaufel bei entsprechender Drehzahl- und Fliehkrafteinwirkung an gegenseitigen Kontaktflächen (Fuß/Nut) herrschenden Momente aus Auflagekräften des Schaufelfußes (z.B. Tannenzapfen-Fuß) in Multiplikation mit dem örtlichen Querabstand (Hebelarm) zur Schaufel-Trägheitsachse ausgeglichen werden.

Die Erfindung ermöglicht die Schaffung einer gewichtlich vergleichsweise leichten Radscheibe, insbesondere z.B. gegenüber Turbinenrädern, die komplett mit Laufschaufeln aus einem temperaturbeständigen hoch-legierten metallischen Werkstoff, z.B. einer Ni- oder Co-Basis-Legierung, gefertigt sind. Dadurch, daß jede zweite über dem Umfang verteilte Laufschaufel spezifisch gewichtlich wesentlich leichter ist, können die äußeren Randlasten deutlich verringert werden, was zu einer (über-) proportionalen Lebensdauererhöhung des Laufrades bzw. der Radscheibe führt.

Die Verwendung der gewichtlich leichten und schweren Laufschaufeln setzt wiederum die Verwendung von verschiedenen Schaufelwerkstoffen mit sehr unterschiedlichen Eigenschaften voraus, u.a.: Gewicht, Steifigkeit, und damit unterschiedliche Resonanzen. Infolge eines zu erwartenden unterschiedlichen Schwingverhaltens ist somit die Erfindung in Kombination mit einer demgemäßen Schwingungsdämpfung ausführbar, z.B. zwischen gegenseitigen Stoßkanten an äußeren Deckbandsegmenten. Die Vorkehrungen zur Schwingungsdämpfung können mit Mitteln zur gegenseitigen relativen Torsionsfreiheit und -hemmung der Laufschaufeln verknüpft sein.

Gemäß der Erfindung ist es ferner vorteilhaft, daß leichte Laufschaufeln trotz an sich mangelnder Schlagzähigkeit bzw. vorhandener Sprödbrüchigkeit (Keramik) ihrer Werkstoffe deshalb eingesetzt werden können, weil sie sich selbst bei vergleichsweise hoher Biegebeanspruchung jeweils an der nächstfolgenden, z.B. aus einer metallischen Superlegierung gefertigten Laufschaufel - innerhalb des gemeinsamen Schaufelverbands - abstützen können. Die hohe Biegebeanspruchung kann z.B. verursacht werden durch einen all zu harten Ausstreifvorgang der betreffenden Schaufelspitzen am Gehäuse oder durch spitzenseitige Verklemmung eines angesaugten Fremdkörpers gegenüber dem Gehäuse oder durch Fremdkörperaufprall. Selbst im Falle eines dabei - trotz Abstützung - noch auftretenden Schaufelbruches besteht die Möglichkeit, das Triebwerk ohne weiteren Schaden auslaufen zu lassen oder - die beschädigte Laufschaufel - erst nach darauf folgender bodenständiger Inspektion - austauschen zu müssen.

Eine bevorzugte Anwendung der Erfindung wird insbesondere bei den letzten Stufen von vergleichsweise hochtourigen Niederdruckturbinen von Gasturbinenstrahltriebwerken gesehen.

Vorteilhafte Ausgestaltungen der Erfindung ergeben sich aus den Merkmalen der Patentansprüche 2 bis 13.

Anhand der Zeichnungen ist die Erfindung durch Ausführungsbeispiele weiter erläutert; es zeigen:
- Fig. 1: die schematische Darstellung eines rückseitigen Abschnitts eines Turbinenlaufrads mit drei Laufschaufeln in Zuordnung zu einem quer geschnitten dargestellten Turbinengehäuseabschnitt,
- Fig. 2: eine an einem Laufradabschnitt verkörperte erste fußseitige Anordnungs- und Gestaltungsalternative für gewichtlich leichte und schwere Laufschaufeln, wobei der Laufradabschnitt geradlinig gestreckt in die Zeichnungsebene projiziert ist,
- Fig. 3: eine an einem Laufradabschnitt verkörperte zweite fußseitige Anordnungs- und Gestaltungsalternative für gewichtlich leichte und schwerere Laufschaufeln, wobei der Laufradabschnitt geradlinig gestreckt in die Zeichnungsebene projiziert ist,
- Fig. 4: eine geradlinig gestreckt in die Zeichnungsebene projizierte äußere Ansicht einer drei Laufschaufeln eines Laufrads nach Fig. 1 betreffenden Deckbandkonstruktion und
- Fig. 5: eine in Blickrichtung X der Fig. 4 gesehene Stirnansicht eines Deckbands unter Ausbildung einer Labyrinth-Dichtung in Zuordnung zu einem Turbinengehäuseabschnitt nebst Einlaufbelag, jeweils in Axrichtung geschnitten dargestellt.

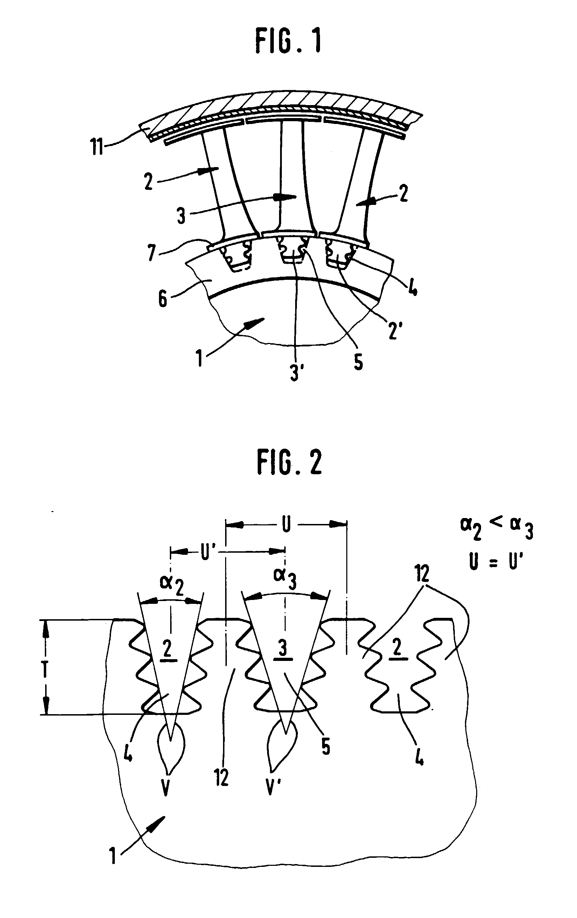

Ein Turbinenlaufrad 1 (Fig. 1) ist fortlaufend abwechselnd mit gewichtlich leichten bzw. schwerer Laufschaufeln 2 bzw. 3 bestückt; dabei sind die Laufschaufeln 2 bzw. 3 in gleichmäßigen Abständen über dem Umfang verteilt angeordnet und jeweils mit ihren Schaufelfüßen 2' bzw. 3' in profilmäßig darauf abgestimmten Axialnuten 4 bzw. 5 am Radkranz 6 in Umfangs- und in radialer Richtung gehalten. Über radial innen liegende Fußplatten 7 können die Laufschaufeln 2 bzw. 3 am Radkranz 6 bzw. geringfügig oberhalb der Radkranzoberfläche zusätzlich in Umfangsrichtung aneinander abgestützt werden. In der schematischen Darstellung nach Fig. 1 sind die jeweils etwa tannenzapfen- bzw. tannenbaumfußartig gestalteten Schaufelfüße 2' bzw. 3' der Einfachheit halber zunächst in jeweils gleichförmiger Gestaltung gezeichnet. Im Hinblick auf betriebsgemäß zu erwartende Schwingerregungen der Laufschaufeln 2' bzw. 3', die insbesondere bezüglich leichter und schwerer Schaufelwerkstoffe, materialspezifisch bedingte unterschiedlich stark ausgeprägte Schaufelschwingungen erwarten lassen, sind Vorkehrungen zur schaufelblattseitigen Schwingungsdämpfung vorzusehen. Hierzu ist eine spezielle schaufelkopfseitige Deckbandkonstruktion vorgesehen (Fig.1 und 4); sie besteht hier z.B. aus jeweils etwa gleichgroßen Deckbandsegmenten 8,8' pro Laufschaufel 2 bzw. 3; gegenseitge Spalte S an benachbarten Stoßkanten der Deckbandsegmente 8,8' werden bei Erreichen eines bestimmten Betriebspunktes, der für ausgeprägte Schaufelschwingungen charakteristisch ist, weitestgehend unter gegenseitiger Bauteilreibung minimiert, wodurch wiederum die Schaufelschwingungen drastisch gedämpft werden können. Individuelle Schaufeltorsionen können durch jeweils örtliche Querspalte S' zwischen den axial bzw. schräg zur Rotorachse verlaufenden bzw. angestellten Spalten S aufgenommen und örtlich begrenzt werden. Die Spalte S bzw. S' charakterisieren einen etwa zick-zack-bzw. sägezahnartigen Stoßkantenverlauf zwischen den Deckbandsegmenten 8,8'. An den Stoßkanten könnten die betreffenden örtlichen Enden der Deckbandsegmente auch in gegenseitiger Überlappung abdichtend und schwingungsdämpfend ausgeführt sein.

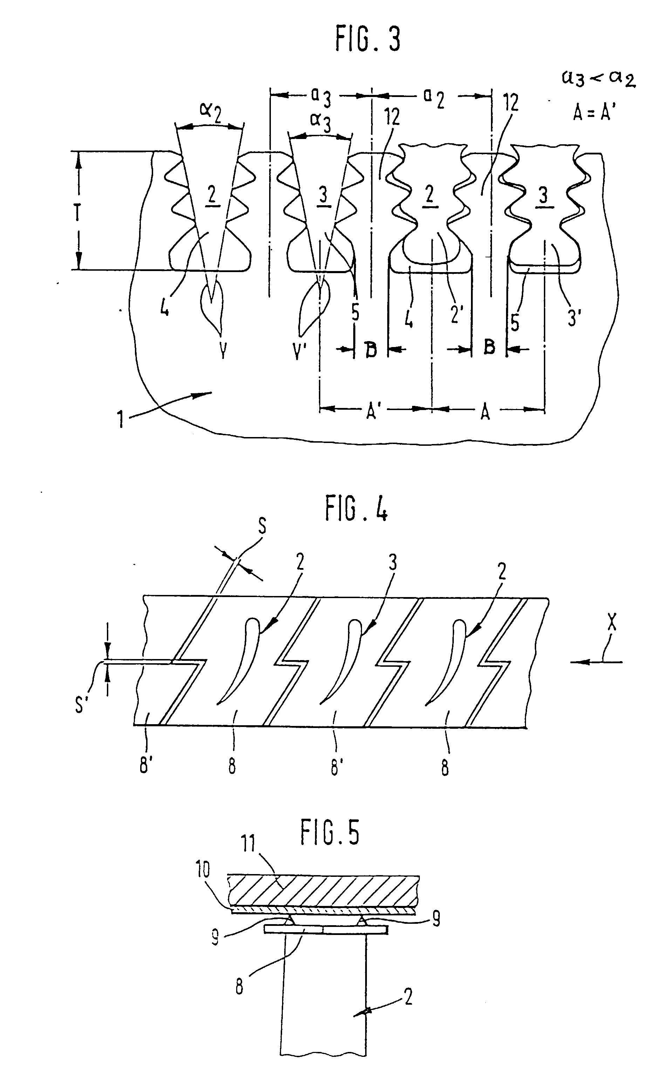

Gemäß Fig. 5 können die Deckbandsegmente, z.B. 8, außen mit sich in Umfangsrichtung erstreckenden Labyrinth-Spitzen 9 versehen sein, die mit einem Einlaufbelag 10 am Turbinengehäuse 11 eine labyrinthartige, schaufelkopfseitige Spaltdichtung für die Heißgasströmung in der Turbine ausbilden. Abweichend von Fig. 4 und 5 wäre es möglich, die Labyrinth-Spitzen 9 an eine über dem Umfang in sich geschlossene Gehäusestruktur anzubinden, innerhalb derselben die Laufschaufeln schwingungsdämpfend und torsionshemmend anzuordnen wären, etwa im Sinne der Fig. 4.

Unter Verwendung der schon in Fig. 1 gewählten Bezugszeichen, verkörpern die Fig. 2 und 3 Anordnungen mit für die gewichtlich leichten bzw. schweren Laufschaufeln 2 bzw. 3 jeweils eigenständigen, sich von außen nach innen in Richtung auf den Nutgrund der Axialnuten 4 bzw. 5 verjüngenden Nut- und damit Fußprofilierungen; dabei soll die jeweilige Nut- und damit Fußprofilverjüngung V (leichte Laufschaufeln 2) bzw. V' (schwere Laufschaufeln 3) auf den unterschiedlichen Kraftfluß der leichten und schweren Laufschaufeln 2 bzw. 3 abgestimmt gestaltet sein. In Fig. 2 ergibt sich für die gewichtlich leichten Laufschaufeln 2 jeweils ein gleicher aber kleinerer Öffnungswinkel α2 der keil- oder V-förmig spitz endenden Profilverjüngung V als derjenige (α3) für die gewichtlich schweren Laufschaufel 3. Ferner ergeben sich in Fig. 2 jeweils im wesentlichen beiderseits ihrer Mittellinien asymmetrisch zahnartig ausprofilierte Scheibenhöcker 12 zwischen je zwei unterschiedlich profilierten Axialnuten 4 bzw. 5 bei jeweils gleichen radialen Nuttiefen T und bei jeweils gleichen mittleren Umfangsabständen U bzw. U' sämtlicher Axialnuten 4 bzw. 5 und der Scheibenhöcker 12. Ferner erkennt man aus Fig. 2, daß die Zahnprofilierungen auf beiden Seiten eines Scheibenhöckers 12 einander sehr ähnlich sind.

Gemäß Fig. 3 sind identische Keilwinkel α2, α3 für leichte bzw. schwere Laufschaufeln 2 bzw. 3 zugrunde gelegt. Demgemäß sind die Profilverjüngungen V,V' praktsich identisch; nicht dargestellt, folgt daraus, daß jeder Scheibenhöcker 12 - relativ zu seiner Mittellinie - auf beiden Seiten symmetrisch ausprofiliert werden könnte. Bei identischen Keilwinkeln α2 = α3 ergibt sich jedoch aus Fig. 3, daß die im Prinzip zunächst jeweils gleichförmig gestalteten Fußnuten 4,5 für leichte und schwere Laufschaufeln 2 bzw. 3 am radial innen liegenden Ende schwalbenschwanzartig sowie unterschiedlich groß dimensioniert sind, so daß sich bei gleichen Mittenabständen A,A' der Nuten 4,5 unterschiedliche relative Mittenabstände (a3<a2) der Scheibenhöcker 12 an ihren Wurzelbereichen ergeben. Es werden also auch gemäß Fig. 3 die an den leichten und schweren Laufschaufeln 2,3 auftretenden Biegemomente durch eine jeweils individuelle Fuß-Nut-Profilgestaltung beherrscht. Hierzu sind bei den leichten Laufschaufeln 2 örtliche Querabstände (Hebelarme), die sich jeweils zwischen einer Kraftkontaktstelle am gegenseitigen Zahneingriff von Fuß 2' und Nut 4 und der Symmetriemittelebene des Schaufelfußes 2' ergeben, größer als bei den schweren Laufschaufeln. Ferner sind gemäß Anordnung der Fig. 3 sämtliche Halsquerschnitte der Scheibenhöcker 12 - bei identischer Halsbreite B - etwa gleich schmal gestaltbar, weil an diesen Stellen sämtlichst vergleichsweise geringe Biegemomente zu beherrschen sind. Es sind in Fig. 3 die radial inneren Fußkonturen der Füße 2',3' der Laufschaufeln 2 bzw. 3 unterschiedlich schwalbenschwanzartig gestaltbar; ferner erkennt man aus Fig. 3, daß die Füße 2',3' der leichten und schweren Laufschaufeln 2 bzw. 3 derart voneinander abweichend profiliert sind, daß die Füße 2' der leichten Laufschaufeln 2 mit örtlich kleineren Sitzflächen an den Profilen der Höcker 12 gehalten sind, als die schwereren Laufschaufeln 3. Der Fig. 3 liegt ebenfalls eine jeweils gleich große radiale Nuttiefe T zugrunde.

In Ausgestaltung stellt sich die Erfindung ferner wir folgt dar.

Die schweren Laufschaufeln 3 können aus einer hoch-legierten, warmfesten metallischen Legierung, die leichten Laufschaufeln 2 aus einer intermetallischen Verbindung (intermetalliche Phasen), insbesondere einem Nickel-, oder Titanaluminid und Legierungen derselben bestehen.

Ferner können die schweren Laufschaufeln 3 aus einem warmfesten hoch-legierten metallischen Werkstoff, die leichten Laufschaufeln 2 aus einem hochtemperaturbeständigen Leichtbaumaterial mit globularer Zellstruktur, z.B. hohl kugel artig, gefertigt sein. Die Anwendung genannter oder anderweitiger intermetallischer Verbindungen, z.B. durch Sinterverfahren, ist möglich.

Ferner können die schweren Laufschaufeln 3 aus einem hoch-legierten hoch-temperaturfesten metallischen Werkstoff, die leichten Laufschaufeln 2 aus einem hoch-temperaturbeständigen keramischen Werkstoff gefertigt sein.

Ferner können die leichten Laufschaufeln 2 aus einem durch Keramikfasern verstärkten, ingenieurkeramischen Werkstoff gefertigt sein.

Ferner können die leichten Laufschaufeln 2 aus durch Siliziumkarbidfasern verstärktem Siliziumkarbid gefertigt sein.

Ferner können die leichten Laufschaufeln 2 aus Siliziumkarbid oder selbstgesintertem Siliziumkarbid oder heißgepreßtem Siliziumkarbid gefertigt sein.

Ferner können die leichten Laufschaufeln 2 aus Siliziumnitrid gefertigt sein, das reaktionsgesintert oder selbstsinternd oder heißgepreßt ist.

Sämtliche genannten Werkstoffalternativen für die Laufschaufeln geringerer Masse (leichte Laufschaufeln) können z.B. jeweils in Kombination mit einem hoch-legierten, warmfesten metallischen Werkstoff für die Laufschaufeln größerer Masse, z.B. einer Ni- oder Co-Basis-Legierung, bei einer heißgasbeaufschlagten Turbine vorgesehen werden.

Nicht dargestellt - können sämtliche Laufschaufeln 2; 3 auch in einem mittleren Umfangsbereich, ähnlich einer Deckband-Konstruktion nach Fig. 4, torsionshemmend und individuell schwingungskompensatorisch aneinander abstützbar sein.

Eine zuvor genannte Deckbandkonstruktion kann aus schaufelintegralen, beidseitig eines Schaufelblatts in Umfangsrichtung auskragenden Elementen bestehen, die an benachbarten, über dem Umfang verteilten Stoßkanten in einem vorgegebenen Betriebspunkt in axialer und in Umfangsrichtung aneinander abgestützt sind.

Sofern nicht schon ausdrücklich beansprucht, sind die zuvor beschriebenen und/oder zeichnerisch dargestellten Merkmale ebenfalls Bestandteil der vorliegenden Erfindung.

## Patentansprüche

1. Laufrad einer Turbomaschine, insbesondere einer Turbine eines Gasturbinentriebwerks, bei der die Laufschaufeln (2,3) mit einer mehrzahnigen Profilierung der Schaufelfüße (2',3') in korrespondierend ausgeformten Axialnuten des Radkranzes (6) verankert und über dem Umfang schwingungsdämpfend aneinander abgestützt sind, dadurch gegekennzeichnet, daß das Laufrad (1) abwechselnd mit Laufschaufeln (2;3) geringerer und größerer Masse bestückt ist, die sich aus unterschiedlicher Dichte des Schaufelmaterials ergibt und daß die Schaufelfüße (2'), die Fußprofile und die Axialnuten (4) der Laufschaufeln (2) geringerer Masse auf die gegenüber den Laufschaufeln (3) größerer Masse reduzierten Fliehkraftbeanspruchungen abgestimmt sind.

2. Laufrad nach Anspruch 1, dadurch gekennzeichnet, daß jeweils gleiche radiale Fußlängen und Nuttiefen für sämtliche Laufschaufeln (2;3) vorgesehen sind, die jeweils ein Tannenzapfen-Fußprofil aufweisen.

3. Laufrad nach Anspruch 1 oder 2, dadurch gekennzeichnet, daß für die Füße (2';3') der Laufschaufeln (2;3) kleiner und großer Masse sich fortlaufend am Umfang zwischen zwei Scheibenhöckern (12) gleichförmig ändernde Profilverjüngungen (V;V') vorgesehen sind, die je nach Masse der Laufschaufeln (2;3) auf die unterschiedlich große Zug- und Biegebelastung abgestimmt sind.

4. Laufrad nach Anspruch 1 oder 2, dadurch gekennzeichnet, daß für die Füße (2';3') der Laufschaufeln (2,3) kleiner und großer Masse fortlaufend am Umfang zwischen zwei Scheibenhöckern (12) im wesentlichen gleichförmige Profilverjüngungen (V;V') vorgesehen sind,
- sämtliche Axialnuten (4;5) am unteren Ende in - relativ zur jeweils übrigen Profilkontur - vergleichsweise große schwalbenschwanzartige Querschnitte übergehen,
- gleiche relativ mittige Umfangsabstände (A,A') der Schaufelfüße (2;3) und Axialnuten (4;5) vorgesehen sind;
- die Scheibenhöcker (12) in gegenseitig unterschiedlichen, relativ mittigen Umfangsabständen (a2, a3) angeordnet sind.

5. Laufrad nach einem oder mehreren der Ansprüche 1 bis 4, dadurch gekennzeichnet, daß die Laufschaufeln größerer Masse aus einem hoch-legierten, warmfesten metallischen Werkstoff bestehen.

6. Laufrad nach Anspruch 5, dadurch gekennzeichnet, daß die Laufschaufeln geringerer Masse aus einer warmfesten intermetallischen Verbindung, insbesondere einem Nickel- oder Titanaluninid und Legierungen derselben bestehen.

7. Laufrad nach einem oder mehreren der Ansprüche 1 bis 6, dadurch gekennzeichnet, die Laufschaufeln geringerer Masse aus einem temperaturbeständigen Leichtbaumaterial mit globularer Zellstruktur gefertigt sind.

8. Laufrad nach Anspruch 5, dadurch gekennzeichnet, daß die Laufschaufel geringerer Masse aus einem keramischen Werkstoff gefertigt sind.

9. Laufrad nach Anspruch 8, dadurch gekennzeichnet, daß die Laufschaufeln geringerer Masse aus einem keramischen Werkstoff gefertigt sind, der durch Keramikfasern verstärkt ist.

10. Laufrad nach Anspruch 9, dadurch gekennzeichnet, daß die Laufschaufeln geringerer Masse aus durch Siliziumkarbidfasern verstärktem Siliziumkarbid gefertigt sind.

11. Laufrad nach Anspruch 8, dadurch gekennzeichnet, daß die Laufschaufeln geringerer Masse aus Siliziumkarbid gerfertigt sind, das selbstsinternd oder heißgepreßt ist.

12. Laufrad nach Anspruch 8, dadurch gekennzeichnet, daß die Laufschaufeln geringerer Masse aus Siliziumnitrid gefertigt sind, das reaktionsgesintert oder selbstsinternd oder heißgepreßt ist.

13. Laufrad nach einem oder mehreren der Ansprüche 1 bis 12, dadurch gekennzeichnet, daß sämtliche Laufschaufeln (2;3) in einem mittleren Umfangsbereich und/oder im schaufelkopfseitigen Umfangsbereich torsionshemmend und schwingungsdämpfend in einem vorgegebenen Betriebspunkt aneinander abstützbar sind, wobei an jedem Schaufelblatt beidseitig in Umfangsrichtung auskragenden Elemente vorgesehen sind, an deren benachbarten Stoßkanten die Laufschaufeln in Umfangs- und in axialer Richtung aneinander abstützbar sind.

## Claims

1. A rotor of a turbo-engine, in particular a turbine of a gas-turbine engine, in which the rotor blades (2, 3) are anchored by a serrated profiling of the blade bases (2', 3') in appropriately shaped axial grooves in the rotor rim (6) and are supported against one another over the periphery in a vibration-damping manner, **characterized in that** the rotor (1) is provided alternately with rotor blades (2, 3) of smaller and greater mass, resulting from differing densities of the blade material, and the blade bases (2'), the base profiles and the axial grooves (4) in the rotor blades (2) of smaller mass are adapted to the reduced centrifugal stresses as compared with those of the rotor blades (3) of greater mass.

2. A rotor according to Claim 1, **characterized in that** the same radial base lengths and groove depths are provided respectively for all the rotor blades (2; 3) each having a base profile in the shape of a fir tree.

3. A rotor according to Claim 1 or 2, **characterized in that** the bases (2'; 3') of the rotor blades (2;. 3) of smaller and greater mass are provided with profile tapers (**V**; **V**') uniformly changing in a continuous manner on the periphery between two disc humps (12) and adapted to the differing degrees of tensile and bending stresses depending upon the mass of the rotor blades (2,3 ).

4. A rotor according to Claim 1 or 2, **characterized in that** the bases (2'; 3') of the rotor blades (2; 3) of smaller and greater mass are provided with profile tapers (**V**; **V**') substantially uniform in a continuous manner on the periphery between two disc humps (12),
- all the axial grooves (4; 5) at the lower end pass into comparatively large - relative to the respectively remaining profile contour - dovetail-shaped cross-sections,
- the same relatively central peripheral distances (**A**, **A**') of the blade bases (2'; 3') and the axial grooves (4; 5) are provided, and
- the disc humps (12) are arranged at mutually different, relatively central peripheral distances (**a2**, **a3**).

5. A rotor according to one or more of Claims 1 to 4, **characterized in that** the rotor blades of greater mass consist of a high-alloy heat-resistant metallic material.

6. A rotor according to Claim 5, **characterized in that** the rotor blades of smaller mass consist of heat-resistant intermetallic compound, in particular a nickel or titanium aluminide and alloys thereof.

7. A rotor according to one or more of Claims 1 to 6, **characterized in that** the rotor blades of smaller mass are produced from a temperature-resistant lightweight material with a globular cell structure.

8. A rotor according to Claim 5, **characterized in that** the rotor blades of smaller mass are produced from a ceramic material.

9. A rotor according to Claim 8, **characterized in that** the rotor blades of smaller mass are produced from a ceramic material reinforced with ceramic fibres.

10. A rotor according to Claim 9, **characterized in that** the rotor blades of smaller mass are produced from silicon carbide reinforced with silicon carbide fibres.

11. A rotor according to Claim 8, **characterized in that** the rotor blades of smaller mass are produced from silicon carbide which is self-sintering or hot-pressed.

12. A rotor according to Claim 8, **characterized in that** the rotor blades of smaller mass are produced from silicon nitride which is reaction-sintered or self-sintering or hot-pressed.

13. A rotor according to one or more of Claims 1 to 12, **characterized in that** all the rotor blades (2; 3) can be supported against one another in a central peripheral area and/or in the peripheral area towards the heads of the blades in a torsion-preventing and vibration-damping manner at a pre-determined operating point, wherein each rotor blade is provided on both sides with members which project in the peripheral direction and on the adjacent borders of which the rotor blades can be supported against one another in the peripheral and axial directions.

## Revendications

1. Rotor de turbomachine notamment d'une turbine à gaz dont les aubes de rotor (2, 3) sont accrochées par les profils à plusieurs dents des talons d'aubes (2', 3') dans des rainures axiales de forme correspondante de la couronne de rotor (6) et s'appuient les unes aux autres de manière à amortir des oscillations dans la direction périphérique, caractérisé en ce que le rotor (1) est garni alternativement d'aubes légères et lourdes (2, 3) résultant de la densité différente de la matière des aubes et en ce que les talons des aubes (2'), les profils des pieds et des rainures axiales (4) des aubes (2) de masse plus réduite sont choisis en fonction des contraintes de forces centrifuges réduites par rapport aux aubes (3) de masse plus importante.

2. Rotor selon la revendication 1, caractérisé en ce que l'on a chaque fois les mêmes longueurs radiales de talon et les mêmes profondeurs de rainure pour toutes les aubes (2, 3) et ces moyens ont un profil de pieds en cône de pin.

3. Rotor selon la revendication 1 ou 2, caractérisé en ce que, pour les pieds (2', 3') des aubes de rotor (2, 3) de faible poids et de poids plus important, il y a en continu à la périphérie, entre chaque fois deux bossages de disques (12), des rétrécissements profilés (V, V') variables de même forme, et qui, selon la masse des aubes de rotor (2, 3) sont choisis en fonction des contraintes de traction et de flexion d'amplitude différente.

4. Rotor selon la revendication 1 ou 2, caractérisé en ce que pour les talons (2', 3') des aubes de rotor (2, 3) de masse petite et grande, en continu à la périphérie entre deux bossages de disque (12), on a des rétrécissements profilés (V, V') essentiellement de même forme,
- toutes les rainures axiales (4, 5) à l'extrémité inférieure rejoignent (par rapport au restant du contour de profilé respectif) des sections en forme de queue d'aronde relativement grandes,
- les mêmes entr'axes relatifs périphériques (A, A') des talons d'aubes (2, 3) et des rainures axiales (4, 5) ;
- les bossages de disque (12) sont prévus à des entr'axes périphériques (a2, a3) relatifs, réciproques différents.

5. Rotor selon une ou plusieurs des revendications 1 à 4, caractérisé en ce que les aubes de masse importante sont réalisées en un métal réfractaire fortement allié.

6. Rotor selon la revendication 5, caractérisé en ce que les aubes de rotor de faible masse sont réalisées en une combinaison intermétallique réfractaire en particulier un aluminure de nickel ou de titane et des alliages de ces aluminures.

7. Rotor selon une ou plusieurs des revendications 1 à 6, caractérisé en ce que les aubes de faible masse sont réalisées en un matériau léger réfractaire ayant une structure cellulaire globulaire.

8. Rotor selon la revendication 5, caractérisé en ce que les aubes de faible masse sont fabriquées en matière céramique.

9. Rotor selon la revendication 8, caractérisé en ce que les aubes de faible masse sont en une matière céramique renforcée par des fibres céramiques.

10. Rotor selon la revendication 9, caractérisé en ce que les aubes de faible masse sont fabriquées en carbure de silicium renforcé par des fibres de carbure de silicium.

11. Rotor selon la revendication 8, caractérisé en ce que les aubes de faible masse sont fabriquées en carbure de silicium fritté seul ou pressé à chaud.

12. Rotor selon la revendication 8, caractérisé en ce que les aubes de faible masse sont fabriquées en nitrure de silicium fritté par réaction ou fritté seul ou pressé à chaud.

13. Rotor selon l'une ou plusieurs des revendications 1 à 12, caractérisé en ce que toutes les aubes (2, 3) sont soutenues dans une zone périphérique médiane et/ou du côté des têtes d'aubes, dans la zone périphérique, de manière à freiner la torsion et à amortir les oscillations en un point de fonctionnement prédéterminé, et au niveau de chaque pale d'aube, il y a des éléments en saillie dans la direction périphérique, de part et d'autre, et dont les arêtes de butée voisines soutiennent les aubes de rotor dans la direction périphérique et dans la direction axiale.
